# EUROPEAN PATENT SPECIFICATION

(11) **EP 4 093 661 B1**
(45) Date of publication and mention of the grant of the patent: **29.05.2024**
(21) Application number: 21702116.1
(22) Date of filing: 20.01.2021
(51) Int. Cl.: B62J 9/14, B62J 43/16, B62J 43/23, B62K 19/16, B62K 19/46

(54) **VEHICLE COMPRISING A BUDDY SPACE**
FAHRZEUG MIT EINEM BUDDY-RAUM
VÉHICULE COMPRENANT UN ESPACE DE CONTACT

(30) Priority: 20.01.2020 NL 2024708; 31.01.2020 NL 2024808
(43) Date of publication of application: 30.11.2022
(73) Proprietor: Ola Electric Mobility B.V., 1062 EA Amsterdam (NL)
(72) Inventor: KAUERHOF, Andreas, 1062KT Amsterdam (NL); SCHEIRLINCK, Erik, 1011 TV Amsterdam (NL); FLIPSE, Marijn Laurens, 1058 GH Amsterdam (NL); JACOBSZ ROSIER, Bart, 1053 LH Amsterdam (NL); DAVIES, Jack, 1062 HJ Amsterdam (NL); MARCHANT, Daniel, 1062 HJ Amsterdam (NL)
(74) Representative: Arnold & Siedsma
(86) International application number: PCT/NL2021/050034
(87) International publication number: WO 2021/150108

(56) References cited:
- EP-A1- 0 444 975
- EP-A1- 1 864 900
- WO-A1-99/29563
- WO-A2-2018/056819
- FR-A1- 2 771 699
- JP-A- H0 966 877
- JP-A- H04 358 980
- JP-U- S55 178 483
- US-A1- 2005 092 538

## Description

The present invention relates to a vehicle that comprises a buddy space having a storage space.

In particular, the vehicle may be a two-wheeled vehicle such as a motor scooter, hereafter also named scooter. Alternatively, the vehicle may also be a trike or a quad that comprises a buddy space. Although the invention is not limited to a scooter, the prior art and disadvantages thereof, as well as the present invention, are merely illustrated by reference to a scooter.

A conventional scooter comprises a structural steel frame that will commonly have an under seat storage area, also known as buddy space. This storage is typically defined by a single plastic moulded component that is placed on the inside of the structural frame. The conventional moulding direction of this part, in combination with the volume the structural frame takes up, results in a substantial amount of useable under seat storage space being lost in prior art scooters.

Additionally, the structural frame of a conventional scooter is one, if not, the main contributor to the final weight of the vehicle. There is an engineering trade-off for scooter manufacturers between reducing the weight of this component whilst maintaining sufficient structural integrity. There is a need to find an optimal balance between weight and strength, as a limited weight improves the range of the vehicle (especially important for electric vehicles (EV's)), increases handling and overall performance.

Japanese patent application JP H09 66877 A discloses a vehicle according to the preamble of claim 1.

The international patent applications WO 99/29563 A1 and WO 2018/056819 A1, the European patent applications EP 0 444 975 A1 and EP 1 864 900 A1, as well as the national patent applications US 2005/092538 A1, FR 2 771 699 A1, JP H04 358980 A and JP S 55 178483 U are acknowledged as further prior art.

An objective of the present invention is to provide a vehicle, that is improved relative to the prior art and wherein at least one of the above stated problems is obviated or alleviated.

Said objective is achieved with the vehicle as described in claim 1.

A structural (steel) frame inside the buddy space, known for example from conventional scooter designs, may be absent in view of the two complementary main parts, that in an assembled state thereof, together form a main structural part of the buddy space that is strong enough to carry users of the vehicle and withstand any other forces the buddy space may be exposed to during normal use of said vehicle. As a result of the redundancy of a conventional structural (steel) frame, the vehicle may benefit from an unobstructed and large storage space. This storage space is large relative to the outer dimensions of the vehicle. For example, if the vehicle is a scooter, it may offer up to 250% more storage space than a conventional scooter with a steel sub frame that has the same outer dimensions of the scooter itself.

The present invention thus relates to the integration of several parts into at least two complementary main parts that together form a main structural part of the buddy space that renders a structural frame inside the buddy space redundant. Relative to a prior art scooter design, the number of parts and/or brackets is reduced, thereby reducing the overall weight and increasing the storage space well beyond the storage space volume of around 7-15 L for conventional scooter designs. Less parts also results in a robust design that is easy to assemble and an associated reduction in production time and costs. The integrated buddy space according to the invention offers approximately 250% more storage space, i.e. around 50 L, as well as reduces manufacturing time and costs. Consequently, overall vehicle cost is also reduced. The integrated buddy space according to the invention therefore provides an improvement related to three main issues of: structural integrity; weight reduction; and increased storage space. The buddy space thus functions as a highly integrated part of the vehicle. Unlike conventional designs, the buddy space according to the invention replaces the steel sub-frame and the under seat storage component.

The vehicle further comprises a battery compartment that is configured to receive one or more than one battery pack, and wherein the storage space is configured to allow a user to insert and remove the one or more than one battery pack from the battery compartment via access provided by the storage space. As mentioned above, the at least two complementary main parts together forming a main structural part of the buddy space that renders a structural frame inside the buddy space redundant, results in a large and unobstructed storage space. In particular, absence of a conventional (steel) frame inside the buddy space, and the at least two complementary main parts together defining an inner contour of the storage space, allows said storage space inside the buddy space to grant a user easy access to the battery compartment. In this way, a user may easily swap a battery pack of the battery, or the user may temporarily remove a battery pack from the vehicle in order to have it charged outside the vehicle.

If, according to a further preferred embodiment, the at least two complementary main parts define the battery compartment as an integrated part with the buddy space, assembly said at least two complementary main parts forms the buddy space and battery compartment in one assembly step. Moreover, the integrated design allows the structural rigidity thereof to be optimized.

The battery compartment is configured to receive at least two battery packs. Although it is possible that one single battery pack defines the battery on its own, increased flexibility is obtained if an assembly of at least two electronically connected battery packs together define the battery. This allows a user to increase the range of the vehicle by adding one or more than one battery pack. For example, each battery pack may offer a range of approximately 80 km. Consequently, a battery that is defined by an assembly of three battery packs, may have an increased range of approximately 240 km. Moreover, instead of charging, a user may also choose to swap an empty battery pack for a fully charged battery pack, which can be done swiftly and comfortably as a result of the spacious access offered by the large and unobstructed storage space.

According to an even further preferred embodiment, die battery compartment is configured to receive and couple the at least two battery packs to form an assembly of the battery packs and thereby define a battery. In this way, a user may easily insert a battery pack into the battery compartment, and once it is fully inserted, the electrical connection that forms the assembly is automatically obtained.

The at least two battery packs are arranged parallel relative to each other and the at least two battery packs are arranged at an offset relative to each other in a longitudinal direction thereof. In this way, the available space inside the scooter may be optimally used, thereby not or only minimally interfering with the storage space under the buddy seat, and thus leaving a large volume of useable under seat storage space.

The battery compartment extends at least partially under a footrest area of the vehicle. A battery is a relatively heavy component, and positioning the battery compartment at least partially under the footrest area maintains the center of gravity of the vehicle as low as possible, thereby contributing to the maneuverability and stability of the vehicle.

Two complementary main parts define a left half and a right half of the buddy space. In this way, tooling during fabrication of the both halves is relatively easy, allowing strengthening ribs to be made on sides of the main parts that, in an assembled state, are directed towards an inside of the buddy space.

According to an even further preferred embodiment, the complementary main parts are made from reinforced plastic, which results in a strong and lightweight buddy space. For example, the buddy space may be made from (but is not limited to) reinforced plastic (PA6+30GF).

According to an even further preferred embodiment, the buddy space integrates two or more of: a body panels mounting structure, a seat hinge, a rear light mounting, a seat lock mounting, a Motor Controller mounting, a DC/DC mounting, a rear fender mounting, a protection frame mounting, and a rear grip mounting. Integrating multiple mounting capabilities in the complementary main parts further simplifies assembly of the vehicle.

According to an even further preferred embodiment, the vehicle is one of a motor scooter, a trike or a quad. For example, motor scooters are relatively compact vehicles, and in view of requirements on maneuverability and energy consumption, the battery is preferably of a limited size and weight. On the other hand, such motor scooters may be used intensively, for example during multiple hours every afternoon to evening for a fast food delivery service. There are conflicting demands on keeping the battery as small and lightweight as possible on the one hand, while on the other hand offering a range that is sufficient for intensive use over a period of multiple hours. In some circumstances, intermediate recharging is not desired, for example during rush hours for a fast food delivery service. The present invention allows battery packs of the battery to be easily swappable via the large storage space, while they may still be arranged relative low in the scooter to keep the center of gravity as low as possible in view of maneuverability.

The various aspects and features described and shown in the specification can be applied, individually, wherever possible. These individual aspects, and in particular the aspects and features described in the attached dependent claims, may be made subject of divisional patent applications.

In the following description preferred embodiments of the present invention are further elucidated with reference to the drawing, in which:
Figure 1 is a cross sectional side view of a buddy space of a vehicle according to a first preferred embodiment of the invention;
Figure 2 is a cross sectional rear view of the buddy space of the vehicle of Figure 1;
Figure 3 is a cross sectional top view of the buddy space of the vehicle of Figure 1;
Figure 4 is a perspective view of an assembled buddy space of the vehicle of Figure 1;
Figure 5 is a perspective view of a buddy space left half of the vehicle of Figure 1;
Figure 6 is a perspective view of a buddy space right half of the vehicle of Figure 1;
Figure 7 is a side view of the buddy space right half of Figure 6; and
Figure 8 is a cross sectional side view of a vehicle according to a second preferred embodiment of the invention, comprising two battery packs and an underseat storage space;
Figure 9 is a cross sectional side view showing the removal of the battery packs out of the vehicle of Figure 8;
Figure 10 is a top perspective view of the vehicle of Figure 8, showing two stored battery packs; and
Figures 11 and 12 are perspective views of an assembled buddy space of a vehicle according to a third preferred embodiment of the invention.

The Figures show three preferred embodiments of a vehicle 3, in particular a scooter 4, comprising a buddy space 1 having a storage space 2. The buddy space 1 is defined by two complementary main parts 8, 9. These two complementary main parts 8, 9 together form a main structural part of the buddy space 1 that renders a structural frame inside the buddy space redundant. Moreover, the two complementary main parts 8, 9 together define both an outer contour of the buddy space 1 and an inner contour of the storage space 2.

The buddy space 1 shown in the Figures forms the storage space 2 in the vehicle 3, which is a scooter 4, as well as the structural sub frame to provide structural integrity to the vehicle 3. Elements to mount components were integrated, such as M6 inserts to mount a rear grip 5, protection frame accessory and electrical components.

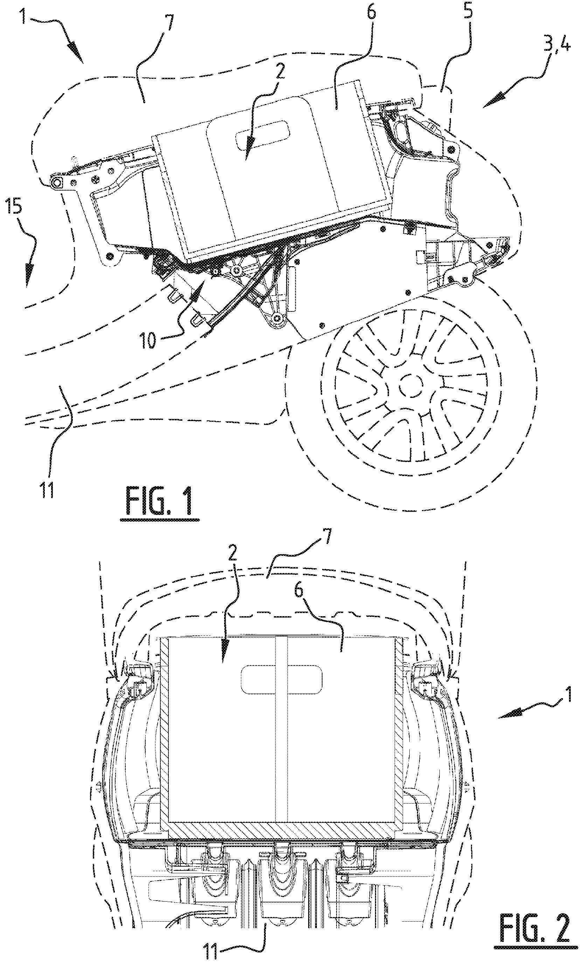

In Figures 1-3, a regular beer crate 6 is shown to elucidate the amount of storage space 2 that is provided by the integrated buddy space 1 according to the invention. The storage space 2 in the buddy space 1 may store a full size beer crate 6 even with the seat 7 fully closed. This storage space 2 is obtained, because a conventional steel sub-frame is absent in the buddy space 2. The buddy space 2 as such is a structural part that provides sufficient structural integrity to make a conventional steel sub-frame redundant. In conventional scooter design, the storage space 2 is bound by the space available between beams of the steel sub-frame and typically comprises an injection moulded storage part. Outside the steel sub-frame, plastic parts define an outer contour of the scooter. Instead, the present invention proposes to replace the conventional combination of injection moulded storage part, steel sub-frame and plastic parts defining the outer contour with an integrated buddy space assembly. This buddy space assembly is highly integrated, and comprises two complementary main parts 8, 9, that define a left half 8 and a right half 9 of the buddy space 1. The buddy space assembly thus defines both the outer contours of the scooter 4 and the inner contours of the storage space 2, while a conventional steel sub-frame is absent, thereby resulting in a significantly increased storage volume that may receive a beer crate 6 of 24 bottles of 0,33 L each.

The section view of Figure 1 also shows the integration of the battery window 10 and the battery tray / battery compartment 11 to the buddy space 1.

Figure 2 shows how much the negative space in the buddy space 1 left and right of the beer crate is created as additional storage space 2.

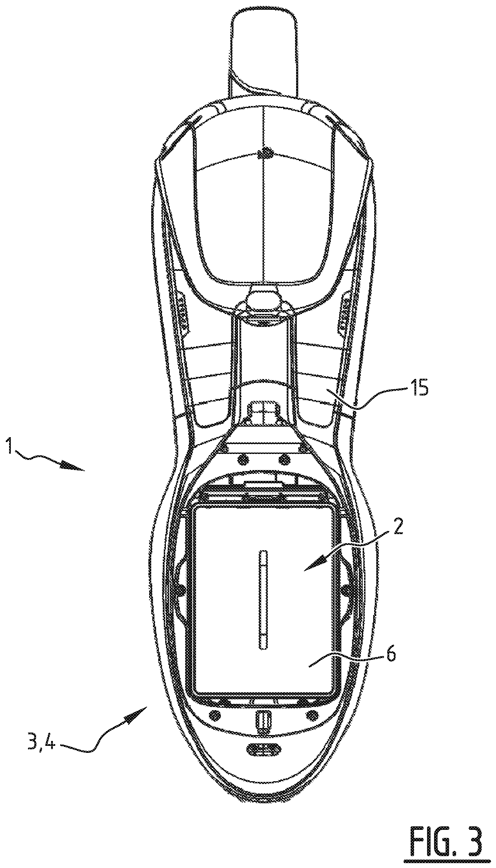

Figure 3 shows, in a top view, the fit of a full size beer crate 6 in the buddy space 1.

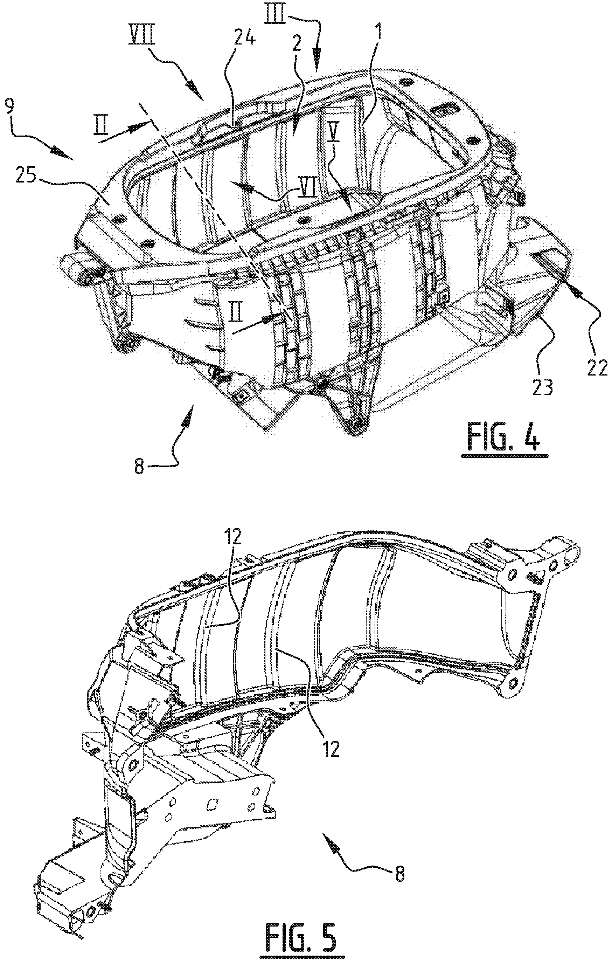

Figure 4 shows the main buddy space 1 component in an assembled state. It is creating a lightweight, highly integrated structure that defines the storage volume of the vehicle 3. A cover edge 25 may be arranged over the assembly of the left half 8 and the right half 9 of the buddy space 1, that define the two complementary main parts 8, 9.

The buddy space left half 8 of Figure 5 shows a single side manufactured injection moulding. The inner side shows corrugations 12 that create stiffness in the component to withstand the load cases accruing in the vehicle 3. The cavity side of the injection moulding tool preferably creates the storage space 2 and is visible in the final assembly. The core side of the injection moulding tool is hidden and contains all engineering features as mounting points, additional structural reinforcement geometry as well as integrated metal threads.

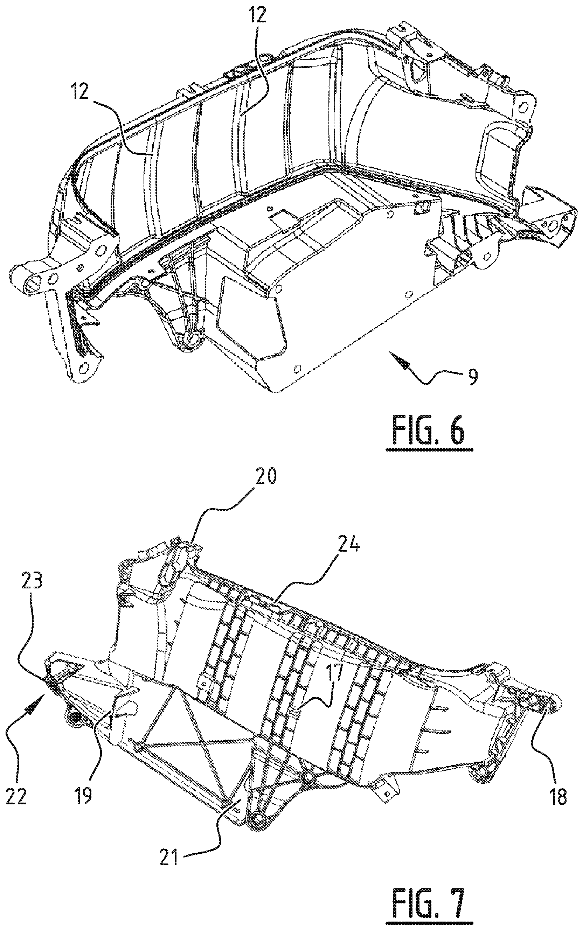

The buddy space right half 9 of Figure 6 shows a single side manufactured injection moulding. The inner side shows corrugations 12 that create stiffness in the component to withstand the load cases accruing in the vehicle 3. The cavity side creates the storage space and is visible in the final assembly. The core side is hidden and contains all engineering features as mounting points, additional structural reinforcement geometry as well as integrated metal threads.

Figure 7 illustrates the high integration of the buddy space 1 in the vehicle 3. It shows which components are attached to the buddy space 1 in the final assembly. The buddy space 1 may integrate two or more of a body panels mounting structure 17, a seat hinge 18, a rear light mounting 19, a seat lock mounting 20, a Motor Controller mounting 21, a DC/DC mounting, a rear fender mounting 22, a protection frame mounting 23, and a rear grip mounting 24. Integrating multiple mounting capabilities in the complementary main parts 8, 9 further simplifies assembly of the vehicle 3.

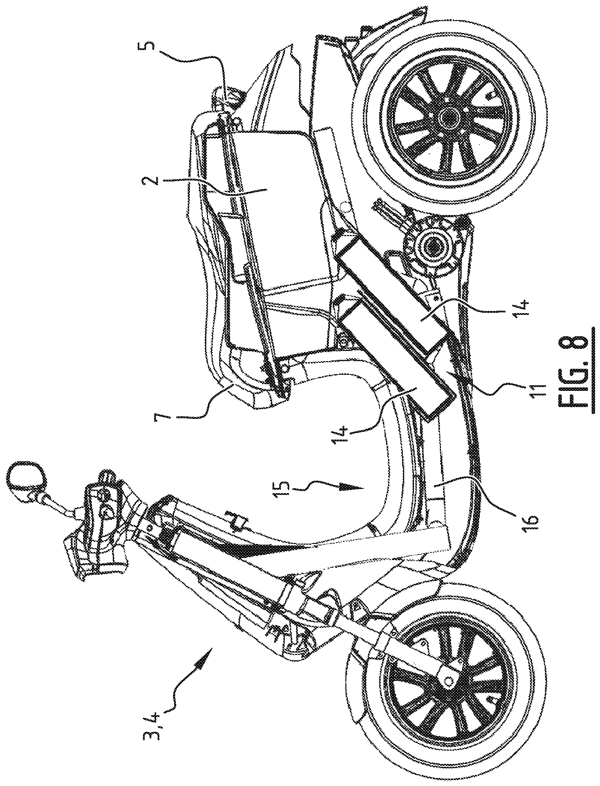

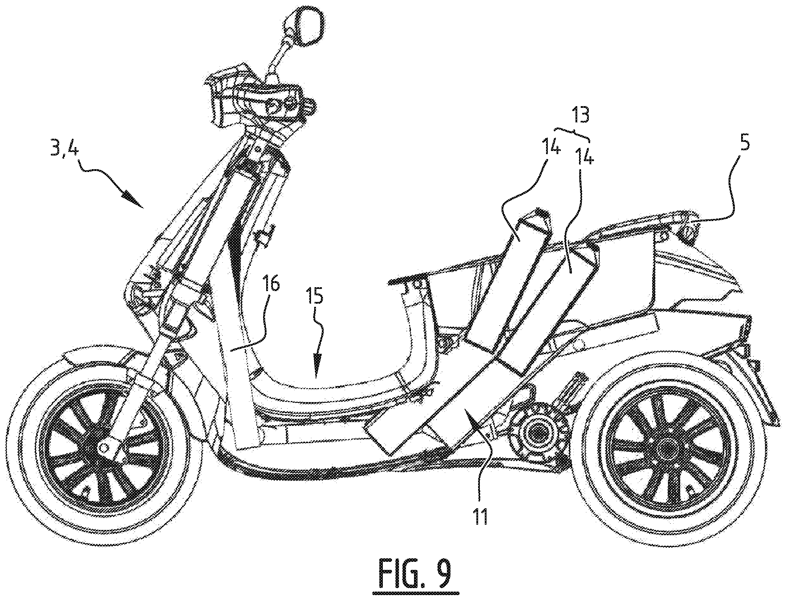

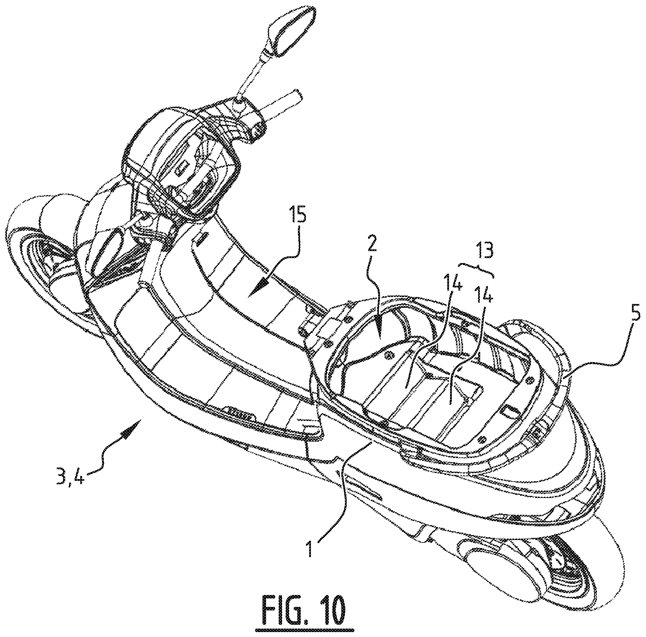

According to the invention, the battery 13 is split up into at least two battery packs 14. These battery packs 14 may be coupled to form an assembly of battery packs 14 that defines the battery 13. By applying at least two battery packs 14, additional flexibility in placing said battery packs 14 compared to one big battery is obtained. As shown in Figures 8-10, the battery packs 14 are arranged parallel and slightly offset in the longitudinal direction thereof, relative to each other. In this way, the available space inside the scooter 4 may be optimally used, thereby not or only minimally interfering with the storage space 2 under the buddy seat 7, and thus leaving a large volume of useable underseat storage space 2, that is shown in Figure 9.

By placing two removable battery packs 14 in an angled orientation in the vehicle 3, this invention may combine two removable battery packs 14. The scooter 4 shown in the Figures may offer a big underseat storage space 2 of around 50 L. The battery 13, which is made up out of two battery packs 14, uses the space in the vehicle 3 efficiently but also still provide an ergonomical way of inserting and removing of the battery packs 14 by the user. This provides a big underseat storage space 2 since this space is not occupied by the battery packs 14.

The removable battery packs 14 are placed under an angle and relatively deep in the vehicle 3 to provide a low center of gravity of the vehicle 3. As can be best seen in the side views, the battery packs 14 may be partially arranged under a footrest area 15. The battery packs 14 are stacks.

Figures 8-10 show how the battery packs 14 are arranged parallel and slightly offset relative to each other in the scooter 4. The battery packs 14 may be stored relatively close to each other to make optimal use of the limited space available.

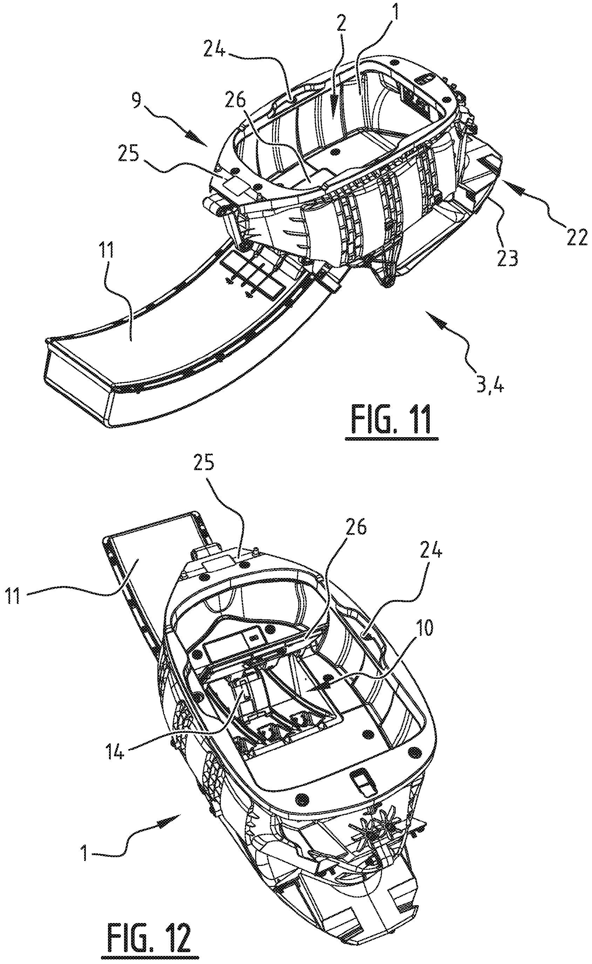

A third preferred embodiment of the invention is shown in Figures 11 and 12. In this embodiment, the two complementary main parts 8, 9 also define the battery compartment 11 as an integrated part with the buddy space 2. In this way, assembling said two complementary main parts 8, 9 forms the buddy space 1 and the battery compartment 11 in one assembly step. Moreover, the integrated design allows the structural rigidity thereof to be optimized. The shape of the buddy space 1 and curved battery compartment 11 may also be recognized in the cross sectional view of Figure 1, where a similarly shaped battery compartment 11 is connected to the buddy space 1 after assembly thereof out of at least complementary main parts 8, 9. In Figure 11, a battery cover 26 covers the battery window 10, that is visible in Figure 12. Figure 12 also shows how the buddy space 1, via the storage space 2 thereof, allows a user to easily and comfortably access the battery compartment 11. The battery compartment 11 in Figure 12 comprises three slots for accommodating a battery pack 14 parallel next to each other. A single battery pack 14 is received in the center slot of the battery compartment 11.

The above described embodiment is intended only to illustrate the invention and not to limit in any way the scope of the invention. In this respect, it is mentioned that a conventional scooter comprises a structural steel frame that will commonly have an underseat storage area, also known as buddy space. This storage is typically defined by a single plastic moulded component that is placed on the inside of the structural frame. The conventional moulding direction of this part, in combination with the volume the structural frame takes up, results in a substantial amount of useable underseat storage space being lost in prior art scooters.

The scooter shown in the Figures applies a buddy space 1 that functions as a highly integrated part of the scooter, thereby providing structural strength that allows a conventional steel sub-frame to be absent in the buddy space 1. Please note that the second embodiment, that is the subject of Figures 8-10, shows that it is sufficient if the buddy space 1 is formed by a structural part that allows a conventional (steel) frame to be absent in said buddy space 1, thereby providing a large and unobstructed storage space 2. However, other parts of the vehicle 3 may still comprise a conventional (steel) frame, for example indicated with the frame 16 in Figures 8 and 9.

The above described embodiment is intended only to illustrate the invention and not to limit in any way the scope of the invention. The scope of the invention is defined solely by the following claims.

## Claims

1. Vehicle, comprising a buddy space (1) having a storage space (2), wherein:
- the buddy space (1) is defined by two complementary main parts (8, 9) that define a left half (8) and a right half (9) of the buddy space (1) and that define both an outer contour of the buddy space (1) and an inner contour of the storage space (2) to thereby form a main structural part of the buddy space that renders a structural frame inside the buddy space redundant; and
- the vehicle (3) further comprising a battery compartment (11) that is configured to receive at least two battery packs (14) that are arranged parallel relative to each other, wherein the battery compartment (11) extends at least partially under a footrest area (15) of the vehicle (3) and is configured to couple the at least two battery packs (14) to form an assembly of the battery packs and thereby define a battery (13),
**characterized in that** the storage space (2) of the buddy space (1) is configured to allow a user to insert and remove the at least two battery packs (14) from the battery compartment (11) via access provided by the storage space (2).

2. Vehicle according to claim 1, wherein the two complementary main parts (8, 9) define the battery compartment (11) as an integrated part with the buddy space (1).

3. Vehicle according to one or more than one of the foregoing claims, wherein the battery compartment (11) is configured to arrange the at least two battery packs (14) at an offset relative to each other in a longitudinal direction thereof.

4. Vehicle according to one or more than one of the foregoing claims, wherein the complementary main parts (8, 9) are made from reinforced plastic.

5. Vehicle according to one or more than one of the foregoing claims, wherein the buddy space (1) integrates two or more of: a body panels mounting structure, structure (17), a seal hinge (18), a rear light mounting (19), a seat lock mounting (20), a Motor Controller mounting (21), a DC/DC mounting, a rear fender mounting (22), a protection frame mounting (23), and a rear grip mounting (24).

6. Vehicle according to one or more than one of the foregoing claims, wherein the vehicle is one of a motor scooter (4), a trike or a quad.

## Patentansprüche

1. Fahrzeug, umfassend einen Buddy-Raum (1) mit einem Stauraum (2), wobei:
- der Buddy-Raum (1) durch zwei komplementäre Hauptteile (8, 9) definiert ist, die eine linke Hälfte (8) und eine rechte Hälfte (9) des Buddy-Raums (1) definieren und die sowohl eine Außenkontur des Buddy-Raums (1) als auch eine Innenkontur des Stauraums (2) definieren, um dadurch einen Hauptstrukturteil des Buddy-Raums zu bilden, der einen strukturellen Rahmen innerhalb des Buddy-Raums überflüssig macht; und
- das Fahrzeug (3) des Weiteren ein Batteriefach (11) umfasst, das so konfiguriert ist, dass es wenigstens zwei Batteriepacks (14) aufnimmt, die parallel zueinander angeordnet sind, wobei sich das Batteriefach (11) wenigstens teilweise unter einem Fußrastenbereich (15) des Fahrzeugs (3) erstreckt und so konfiguriert ist, dass es die wenigstens zwei Batteriepacks (14) koppelt, um eine Anordnung der Batteriepacks zu bilden und dadurch eine Batterie (13) zu definieren,
**dadurch gekennzeichnet, dass** der Stauraum (2) des Buddy-Raums (1) so konfiguriert ist, dass er es einem Benutzer ermöglicht, die mindestens zwei Batteriepacks (14) über einen Zugang, der durch den Stauraum (2) bereitgestellt wird, in das Batteriefach (11) einzusetzen und daraus zu entfernen.

2. Fahrzeug nach Anspruch 1, wobei die zwei komplementären Hauptteile (8, 9) das Batteriefach (11) als ein integriertes Teil mit dem Buddy-Raum (1) definieren.

3. Fahrzeug nach einem oder mehreren der vorhergehenden Ansprüche, wobei das Batteriefach (11) so konfiguriert ist, dass es die mindestens zwei Batteriepacks (14) in seiner Längsrichtung versetzt zueinander anordnet.

4. Fahrzeug nach einem oder mehreren der vorhergehenden Ansprüche, wobei die komplementären Hauptteile (8, 9) aus verstärktem Kunststoff bestehen.

5. Fahrzeug nach einem oder mehreren der vorhergehenden Ansprüche, wobei der Buddy-Raum (1) zwei oder mehr der folgenden Elemente integriert: eine Karosserieplatten-Befestigungsstruktur (17), ein Sitzscharnier (18), eine Rücklichtbefestigung (19), eine Sitzverriegelungsbefestigung (20), eine Motorsteuerungsbefestigung (21), eine DC/DC-Befestigung, eine hintere Kotflügelbefestigung (22), eine Schutzrahmenbefestigung (23) und eine hintere Griffbefestigung (24).

6. Fahrzeug nach einem oder mehreren der vorhergehenden Ansprüche, wobei das Fahrzeug ein Motorroller (4), ein Trike oder ein Quad ist.

## Revendications

1. Véhicule comprenant un espace de contact (1) présentant un espace de stockage (2), dans lequel :
- l'espace de contact (1) est défini par deux parties principales complémentaires (8, 9) qui définissent une moitié gauche (8) et une moitié droite (9) de l'espace de contact (1) et qui définissent à la fois un contour extérieur de l'espace de contact (1) et un contour intérieur de l'espace de stockage (2) pour former ainsi une partie structurelle principale de l'espace de contact qui rend redondant un cadre structurel à l'intérieur de l'espace de contact ; et
- le véhicule (3) comprenant en outre un compartiment de batterie (11) qui est configuré pour recevoir au moins deux bloc-batteries (14) qui sont agencés parallèlement l'un à l'autre, dans lequel le compartiment de batterie (11) s'étend au moins partiellement sous une zone de repose-pied (15) du véhicule (3) et est configuré pour coupler les au moins deux bloc-batteries (14) afin de former un ensemble des bloc-batteries et définir ainsi une batterie (13),
**caractérisé en ce que** l'espace de stockage (2) de l'espace de contact (1) est configuré pour permettre à un utilisateur d'insérer et de retirer les au moins deux bloc-batteries (14) du compartiment de batterie (11) via l'accès fourni par l'espace de stockage (2).

2. Véhicule selon la revendication 1, dans lequel les deux parties principales complémentaires (8, 9) définissent le compartiment de batterie (11) comme une partie intégrée avec l'espace de contact (1).

3. Véhicule selon l'une ou plusieurs des revendications précédentes, dans lequel le compartiment de batterie (11) est configuré pour agencer les au moins deux bloc-batteries (14) en un déport l'un par rapport à l'autre dans une direction longitudinale de ceux-ci.

4. Véhicule selon l'une ou plusieurs des revendications précédentes, dans lequel les parties principales complémentaires (8, 9) sont réalisées en matière plastique renforcée.

5. Véhicule selon l'une ou plusieurs des revendications précédentes, dans lequel l'espace de contact (1) intègre deux ou plusieurs parmi : une structure de montage de panneaux de corps, structure (17), une articulation de siège (18), un montage de feu arrière (19), un montage de verrou de siège (20), un montage de dispositif de commande de moteur (21), un montage CC/CC, un montage d'aile arrière (22), un montage de cadre de protection (23) et un montage de poignée arrière (24).

6. Véhicule selon l'une ou plusieurs des revendications précédentes, dans lequel le véhicule est un parmi un scooter à moteur (4), un tricycle ou un quad.
